# FASCICULE DE BREVET EUROPEEN

(11) **EP 1 870 600 B1**
(45) Date de publication et mention de la délivrance du brevet: **14.09.2016**
(21) Numéro de dépôt: 07110629.8
(22) Date de dépôt: 20.06.2007
(51) Int. Cl.: F16F 1/38, F16C 27/06, F04D 29/56

(54) **Palier pour pivot d'aube de redresseur à calage variable de turbomachine, aube de redresseur et turbomachine associées**
Lager für den Drehzapfen einer Leitschaufel einer Turbomaschine mit variablem Einstellwinkel, zugehörige Leitschaufel und Turbomaschine
Bearing for the trunnion of a turbomachine stator vane with variable setting, corresponding stator vane and turbomachine

(30) Priorité: 21.06.2006 FR 0652565
(43) Date de publication de la demande: 26.12.2007
(73) Titulaire: SNECMA, 75015 Paris (FR)
(72) Inventeur: Houradou, Emmanuel, 75012 Paris (FR); Hulin, Hervé, 45170, Tivernon (FR); Juste, Sébastien, 77310, Saint Fargeau Ponthierry (FR); Raulin, Dominique, 77210, Avon (FR)
(74) Mandataire: Gevers & Orès

(56) Documents cités:
- EP-A1- 1 679 445
- FR-A1- 2 784 711
- FR-A1- 2 793 521
- FR-A1- 2 853 382
- GB-A- 1 014 625
- GB-A- 1 199 946
- JP-A- 2008 196 385
- US-A- 2 932 440
- US-A- 2 999 630
- US-A- 3 788 763
- US-A- 4 050 844
- US-A- 4 765 758
- US-A1- 2005 013 519

## Description

La présente invention se rapporte au domaine des turbomachines tel qu'un compresseur axial de moteur à turbine à gaz, et vise en particulier les aubes de stator à calage variable de la machine.

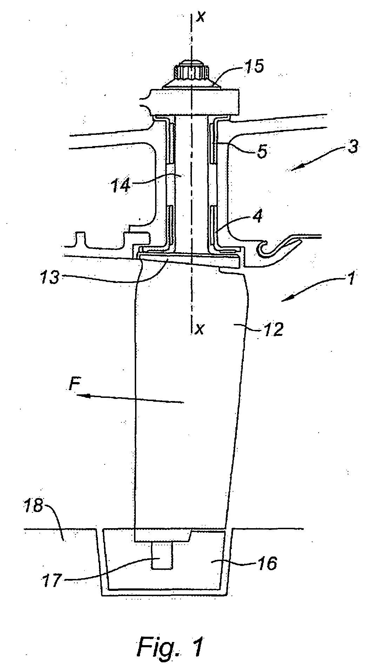

Un système articulé, comme les aubes de redresseur à calage variable d'un compresseur de moteur à turbine à gaz, comprend des pièces en mouvement relatif les unes par rapport aux autres. Sur la figure 1, on a représenté de façon schématique, une aube 1 de redresseur à calage variable montée dans le carter 3 de la machine. L'aube statorique comprend une pale 12, une platine ou plateforme 13 et une tige formant pivot 14 à une extrémité. Le pivot 14 est logé dans un alésage ou orifice radial ménagé dans la paroi du carter 3 par l'intermédiaire de différents paliers. L'aube n'est tenue que par cette extrémité. L'autre extrémité retient un élément annulaire flottant 16 dans lequel il est monté pivotant par un second pivot 17. L'anneau est pourvu de moyens d'étanchéité pour la partie du rotor 18 qui lui est adjacente.

Le pivot 14 tourillonne dans l'alésage correspondant du carter par l'intermédiaire de paliers, par exemple un palier bas 4 du côté de la plateforme. La plateforme 13 est logée dans une cavité en forme de lamage usiné dans la paroi de ce carter. La paroi du carter est en contact radial avec la plateforme 13 soit directement soit par l'intermédiaire d'une douille ou rondelle. La partie haute du pivot 14 est retenue dans un palier haut 5. Les paliers 4 et 5 sont par exemple constitués de douilles logées dans l'alésage du carter avec une bague interne formant surface de frottement avec la tige 14 formant pivot. Une bague de frottement peut également être frettée sur la tige 14.

La face opposée de la plateforme 13 par rapport au palier 4 forme la base de la pale et est balayée par les gaz mis en mouvement par le compresseur. Cette face de la platine est conformée de manière à assurer la continuité de la veine formée par le carter. Un écrou 15' maintient l'aube dans son logement et un levier actionné par des organes de commande appropriés, commande la rotation de l'aube autour de l'axe XX de la tige pour mettre celle-ci dans la position requise par rapport à la direction du flux gazeux. Les mouvements relatifs résultent du glissement des surfaces en contact entre elles.

Dans le cas d'un compresseur axial de moteur à turbine à gaz ou bien d'un compresseur axial seul d'air ou autre gaz, tel que de haut fourneau ou gaz naturel, la pale 12 est soumise sur toute sa longueur aux efforts aérodynamiques et de pression engendrés par le flux gazeux. La composante de ces efforts orientée perpendiculairement à la corde dans le sens intrados vers extrados, en passant généralement par l'axe du pivot est la plus importante. On note aussi que dans les cas de braquages importants la composante peut s'écarter de cet axe. La pale est soumise aussi à des efforts axiaux de pression statique dirigés vers l'amont en raison de la différence de pression entre l'aval et l'amont. La force résultante est illustrée par la flèche F sur la figure. Il s'ensuit l'application d'un moment qui associé à la rotation de calage autour de l'axe XX sur une amplitude qui peut atteindre et dépasser 40 degrés.

Comme on l'a mentionné plus haut les douilles que l'on monte sous les leviers du système de calage variable ne permettent aucun mouvement autre que la rotation autour de l'axe du pivot. On constate toutefois qu'en raison des efforts transversaux et de la flexion des redresseurs les douilles de l'art antérieur présentent une usure irrégulière. Une telle usure est dommageable au bon fonctionnement du dispositif de calage variable.

On connaît US3788763 qui décrit un montage de l'art antérieur avec une douille en matériau élastomère et avec un bon coefficient de glissement. On connaît aussi US 2932440 dont le pivot est supporté par des éléments rigide travaillant en torsion. US 2999 630 décrit le préambule de la revendicaton 1.

Le déposant s'est fixé comme objectif la mise en place de moyens pour supporter les aubes à calage variable du type présenté ci-dessus non ou moins sujets à usure.

Conformément à l'invention, on parvient à cet objectif avec un palier pour pivot d'aube de redresseur à calage variable de turbomachine monté dans un alésage du carter de la turbomachine, selon la revendication 1.

Grâce à cette disposition le palier fonctionne comme une rotule et permet d'augmenter la surface effective entre le pivot et la douille externe. L'usure des pièces s'en trouve ainsi réduite.

La structure de douille selon l'invention a également comme avantage d'avoir, le cas échéant, un effet amortisseur. Il permet de dissiper l'énergie vibratoire lorsque le redresseur est soumis à des excitations aérodynamiques. Les modes vibratoires des redresseurs s'en trouvent amoindris.

Selon l'invention la douille interne est subdivisée en deux éléments cylindriques au moins dans le prolongement l'un de l'autre. Cela permet à la douille interne de s'adapter aux déformations du pivot. On peut augmenter le nombre d'éléments constituant la douille interne de façon à procurer une adaptation la plus fidèle possible.

Selon l'invention, les différents éléments sont séparés par une couche annulaire d'élastomère de façon à améliorer l'étanchéité le long du pivot.

Un tel agencement de palier est avantageux lorsqu'il est appliqué au palier monté sous le levier d'actionnement de l'aubage.

On décrit maintenant l'invention plus en détail en référence aux dessins annexés sur lesquels
La figure 1 montre vue en coupe de profil une aube de redresseur à calage variable montée dans un alésage du carter d'une turbomachine, selon l'art antérieur ;
La figure 2 montre vue en coupe de profil et agrandie par rapport à la première la partie du pivot du côté de la biellette de commande avec le montage selon l'invention ;
La figure 3 montre en demi coupe et en perspective le palier selon l'invention, seul.

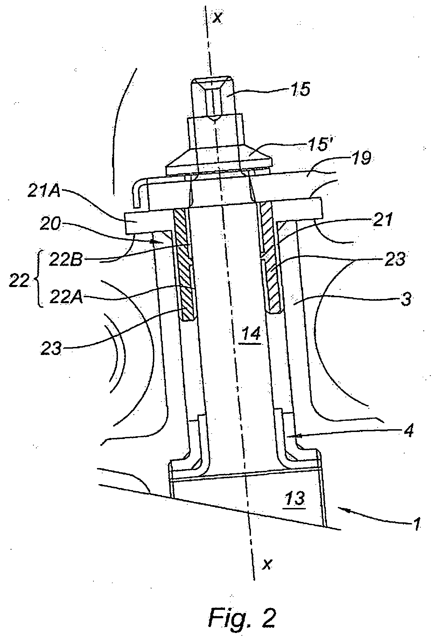

En référence à la figure 2, on voit le pivot 14 de l'aube 1 monté dans l'alésage du carter 3 de manière à en permettre la rotation autour de l'axe XX. Le pivot se termine par un tourillon 15 sur lequel est fixé par un écrou 15' une biellette 19 d'actionnement angulaire de l'aube autour de l'axe XX.

Le pivot est supporté par un palier 4 du côté de la plateforme 13 - la pale n'est pas représentée - et par un palier 20 du côté de la biellette 19. L'invention concerne le palier 20. Celui-ci est composé d'une douille externe 21 frettée dans l'alésage du carter 3. Cette douille externe est donc cylindrique avec une collerette 21 A, transversale, reposant sur le bord extérieur de l'alésage. Cette collerette est interposée entre le carter et la biellette 19.

Une douille interne 22, en deux éléments cylindriques 22A et 22B légèrement espacés axialement l'un de l'autre, est frettée sur le pivot 14. Cette douille interne s'étend axialement sur la même longueur que la douille externe 21.

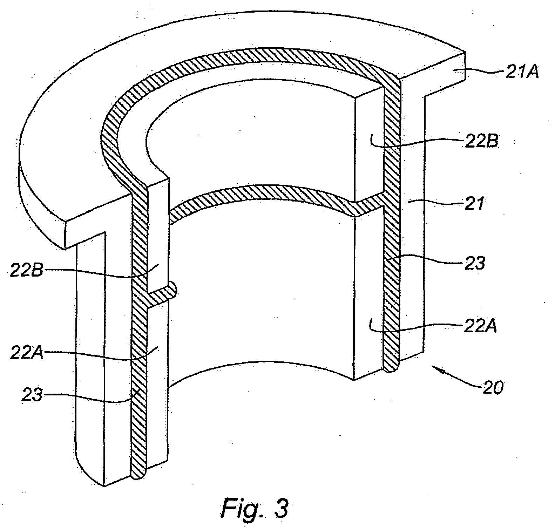

Un espace est ménagé entre les deux douilles qui est occupé par un matériau élastomère. Avantageusement, celui-ci adhère aux deux douilles 21 et 22 et occupe l'espace ménagé entre les deux éléments cylindriques 22A et 22B. La figure 3 montre plus en détail la disposition des douilles entre elles.

Le matériau élastomère est choisi de façon à, en se déformant, permettre un mouvement de rotation d'une douille par rapport à l'autre d'un angle dans un sens et dans l'autre, correspondant au réglage du calage requis du redresseur.

L'épaisseur du matériau élastomère est également un des paramètres dont il faut tenir compte dans l'élaboration du palier.

En comblant l'espace annulaire ménagé entre les deux éléments de douille, 22A et 22B, l'élastomère participe à l'étanchéité le long de la surface du pivot. On observe que seulement deux éléments sont représentés mais la douille interne peut être composée d'une pluralité d'éléments.

En fonctionnement le matériau élastomère accompagne les mouvements de rotation du pivot autour de l'axe XX tout en assurant une bonne étanchéité mais aussi absorbe les efforts appliqués sur le pivot dans le sens transversal et les répartit sur une surface plus grande que si le contact entre les pièces mobiles était lisse et dur.

On a représenté le palier selon l'invention appliqué au support externe du pivot mais il peut être employé dans d'autres zones dans la mesure où l'environnement, en particulier thermique, le permet.

## Revendications

1. Palier (20) pour pivot (14) d'aube de redresseur à calage variable de turbomachine monté dans un alésage du carter de la turbomachine, comprenant une douille interne (22) solidaire dudit pivot et une douille externe (21) solidaire dudit alésage, un matériau élastomère (23) étant interposé entre la douille interne et la douille externe permettant en se déformant le pivotement de l'aube autour de son axe (XX) **caractérisé par le fait que** la douille interne (22) est en au moins deux éléments cylindriques (22A, 22B) positionnés dans le prolongement l'un de l'autre et séparés par une couche annulaire d'élastomère de façon à permettre l'absorption au moins en partie de la flexion du pivot perpendiculairement à l'axe.

2. Palier selon la revendication précédente dont la couche d'élastomère séparant lesdits deux éléments fait, au repos, saillie à l'intérieur de ladite douille interne, de façon à assurer, après montage, l'étanchéité le long de la surface du pivot (14)

3. Aube de redresseur de turbomachine avec un pivot (14) destiné à être monté dans un alésage ménagé dans le carter (3) de la turbomachine, et un tourillon (15) de fixation d'une biellette (19) de commande du calage de l'aube comportant un palier (20), selon l'une des revendications précédentes, disposé à l'extrémité du pivot (14) et dont la douille externe est pourvue d'une collerette (21A).

4. Turbomachine comportant des aubes de redresseur avec des paliers selon l'une des revendications 1 et 2.

## Patentansprüche

1. Lager (20) für die Welle (14) einer Gleichrichterschaufel mit variabler Verstellung für eine Turbomaschine, das in einer Bohrung des Gehäuses der Turbomaschine angebracht ist, mit einer inneren Hülse (22), die mit der Welle einstückig ausgebildet ist, und einer äußeren Hülse (21), die mit der Bohrung einstückig ausgebildet ist, wobei ein Elastomermaterial (23) zwischen der inneren Hülse und der äußeren Hülse liegt, das, indem es sich verformt, die Drehung der Schaufel um seine Achse (XX) ermöglicht, **dadurch gekennzeichnet, dass** die interne Hülse (22) aus mindestens zwei zylindrischen Elementen (22A, 22B) besteht, die als Verlängerung voneinander positioniert sind und durch eine ringförmige Elastomerschicht getrennt sind, um die Absorption von zumindest teilweise der Biegung der Welle rechtwinklig zu der Achse zu ermöglichen.

2. Lager nach dem vorhergehenden Anspruch, wobei die Elastomerschicht, welche die zwei Elemente trennt, im Ruhezustand ins Innere der internen Hülse hervorstehen gelassen wird, um nach der Anbringung die Dichtigkeit entlang der Oberfläche des Lagers (14) sicherzustellen.

3. Gleichrichterschaufel für eine Turbomaschine mit einem Lager (14), das dazu vorgesehen ist, in einer Bohrung, die in dem Gehäuse (3) der Turbomaschine ausgebildet ist, angebracht zu werden, und einem Stift (15) zur Befestigung einer Stange (19) zur Steuerung der Verstellung der Schaufel mit einem Lager (20) nach einem der vorhergehenden Ansprüche, wobei sie am Ende der Welle (14) angebracht ist und deren äußere Hülse mit einem Kragen (21 A) versehen ist.

4. Turbomaschine, die Gleichrichterschaufeln mit Lagern nach einem der Ansprüche 1 und 2 umfasst.

## Claims

1. Bearing (20) for a pivot (14) of a variable pitch guide vane of a turbine engine, which pivot is mounted in a hole in the turbine engine casing, comprising an inner bushing (22) which is rigidly connected to said pivot and an outer bushing (21) which is rigidly connected to said hole, an elastomer material (23) being inserted between the inner bushing and the outer bushing which, by deforming, allows the vane to pivot about its axis (XX), **characterised in that** the inner bushing (22) is made of at least two cylindrical elements (22A, 22B) positioned in the extension of one another and separated by an annular elastomer layer so as to allow at least some of the bending of the pivot to be absorbed perpendicularly to the axis.

2. Bearing according to the preceding claim, wherein the elastomer layer which separates said two elements projects inside said inner bushing when inoperative so as to ensure sealing along the surface of the pivot (14) after the mounting thereof.

3. Turbine engine guide vane comprising a pivot (14), which is intended for being mounted in a hole made in the casing (3) of the turbine engine, and a journal (15) for attaching to a vane pitch control rod (19) comprising a bearing (20) according to either of the preceding claims which is arranged at the end of the pivot (14) and the outer bushing of which is provided with a collar (21 A).

4. Turbine engine comprising guide vanes which comprise bearings according to any of claims 1 and 2.
